(19) **Europäisches Patentamt**
**European Patent Office**
**Office européen des brevets**

(11) **EP 2 074 851 B1**

(12) **EUROPEAN PATENT SPECIFICATION**

(45) Date of publication and mention
of the grant of the patent:
**03.12.2014 Bulletin 2014/49**

(21) Application number: **06799840.1**

(22) Date of filing: **05.10.2006**

(51) Int Cl.:
**H04W 36/18** *(2009.01)*

(86) International application number:
**PCT/SE2006/050380**

(87) International publication number:
**WO 2008/041894 (10.04.2008 Gazette 2008/15)**

(54) **MIMO MODE SELECTION AT HANDOVER**

MIMO-MODUSAUSWAHL BEIM HANDOVER

SÉLECTION DU MODE MIMO LORS DU TRANSFERT

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**01.07.2009 Bulletin 2009/27**

(73) Proprietor: **Telefonaktiebolaget LM Ericsson
(publ)
164 83 Stockholm (SE)**

(72) Inventors:
• **KAZMI, Muhammad
167 39 Bromma (SE)**

• **LIAO, Jingyi
Beijing 100044 (CN)**

(74) Representative: **Kühn, Friedrich Heinrich
Ericsson AB
Patent Unit LTE
Torshamnsgatan 23
164 80 Stockholm (SE)**

(56) References cited:
**EP-A2- 1 587 338      EP-A2- 1 613 117
EP-A2- 1 626 600      WO-A1-99/67902
US-A1- 2003 186 698   US-A1- 2005 160 181
US-A1- 2005 281 221   US-A1- 2006 068 789**

**Description**

BACKGROUND OF THE INVENTION

This invention relates to a mobile communication system, and in particular to a cellular system in which different MIMO modes are available in different nodes of the network.

Over the last few years, much research has been performed on using multiple transmit and receive antennas to deliver high data rates over wireless channels. A system with multiple transmit antennas and multiple receive antennas is referred to as a multiple input multiple output (MIMO) system. Different multi-antenna methods have been proposed, and different methods have different advantages, in terms of their ability to exploit the different properties of the radio channel.

Different spatial processing has the potential to contribute significantly to improve spectral efficiency, diversity, coverage, interference mitigation, etc. For example, a proposal described as per antenna rate control (PARC) can in principle achieve high spectral efficiency by transmitting independent symbol streams. An alternative proposal, receiver diversity, increases link reliability by introducing redundancy in multiple dimensions, but does not provide the same improved spectral efficiency as the PARC proposal.

In principle, each MIMO method corresponding to a single spatial process algorithm provides either multiplexing or diversity gains. However, it is also possible to adapt between different methods to find a reasonable trade-off between the two types of performance gain.

It is therefore realised that changing the system mode can improve the system performance. However, different MIMO schemes require different types of measurement report, the selection of the mode will have an impact on the performance of other processes, such as Hybrid ARQ (HARQ). For example, if, during mode switching, the Node-B or the RNC are doing other high priority processes, e.g., handover, the mode switching may result in the loss of some HARQ processes or the loss of some HARQ soft combining process due to heavy handover signalling requirements.

US 6,937,592 describes a system in which a wireless communication system is able to adapt its mode of operation between spatial multiplexing and non-spatial multiplexing in response to transmission-specific variables.

US 2006/0068789 discloses a handoff method in a wireless communication network enabling an exchange of radio configuration selection information between the target and source base station involved in the handoff.

EP 1613117 discloses a method for transmitting uplink control information in a communication system. A mobile station selects a target anchor base station and transmits a code-word allocated to this base station to a current anchor base station.

SUMMARY OF THE INVENTION

According to a first aspect of the present invention, there is provided a method for performing a handover of a user equipment from a serving radio base station to a target radio base station according to claim 1.

According to a second aspect of the present invention, there is provided a radio base station, for use in a cellular communications network according to claim 7.

BRIEF DESCRIPTION OF DRAWINGS

For a better understanding of the present invention, reference will now be made, by way of example, to the accompanying drawings, in which:

Figure 1 is a schematic diagram of a wireless communications system in accordance with the present invention.

Figure 2 is a flow chart, illustrating a method in accordance with the present invention.

Figure 3 illustrates signalling in the system of Figure 1, in an embodiment of the present invention.

Figure 4 is a schematic diagram of a further wireless communications system in accordance with the present invention.

Figure 5 illustrates signalling in the system of Figure 4, in an embodiment of the present invention.

DETAILED DESCRIPTION OF EMBODIMENTS

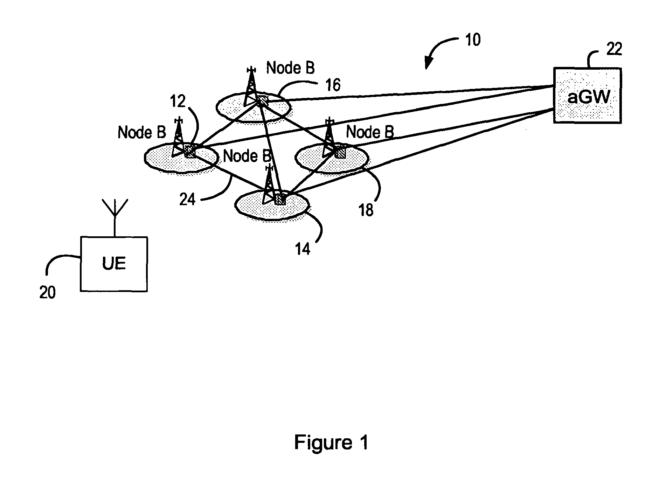

Figure 1 is a schematic diagram, illustrating a part of a cellular wireless communications system 10. Specifically, Figure 1 shows four Node Bs 12, 14, 16, 18, providing cellular network coverage for mobile devices, such as the User Equipment (UE) 20, moving within the network coverage area. Each of the Node Bs 12, 14, 16, 18 has a connection to an access gateway (aGW) 22. It will be clear to the person skilled in the art that the system 10 will in fact include many more Node Bs, and many more mobile devices, but the system shown in Figure 1 is sufficient for an explanation of the present invention.

Figure 1 shows a distributed system, in which the access gateway 22 performs only user plane switching, and does not transfer any radio related information. Logical links, such as the link 24 between the Node B 12 and the Node B 14, are provided, and the exchange of radio related information is performed over the various Node B - Node B interfaces.

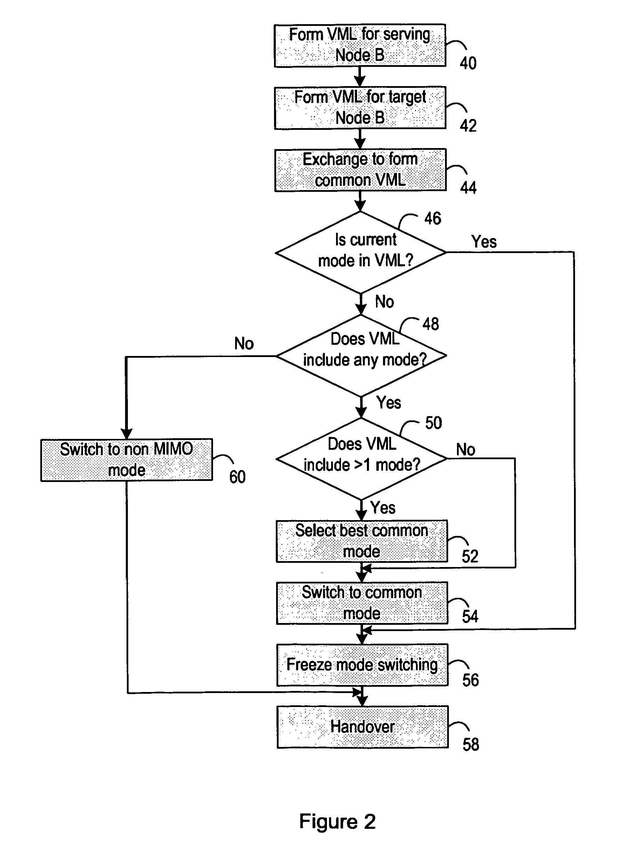

Figure 2 is a flow chart, illustrating a method in accordance with an aspect of the invention.

The method is concerned with a situation where a mobile device, such as the User Equipment (UE) 20 in Figure 1, is within the coverage area of a serving Node B, such as the Node B 12 in Figure 1, and a handover to a target Node B. such as the Node B 14 in Figure 1, is contemplated.

In this description, the term hanover" is used to mean any type of handover, such as an intra-cell handover, an inter-cell handover, an inter-RAT handover or a cell change. In step 40, a virtual mode list (VML) is formed for the serving Node B. As used herein, the term "virtual mode list" refers to a list of all of the possible modes, such as different MIMO modes, that can be jointly supported by the UE and the relevant Node B. That is, the virtual mode list $V_{VML-serving}$ for a user i is the list containing those modes supported both by the $i$th UE and by the serving Node B. Thus:

$$V_{VML\_serving} = V_{UE} \cap V_{NodeB\_serving} = [\alpha_1, \alpha_2, \ldots, \alpha_M]$$

where $V_{UE}$ and $V_{NodeB\_serving}$ are the modes supported by UE and the serving Node B respectively and '$\alpha$' is the MIMO mode ID.

In the case of the distributed architecture shown in Figure 1, the virtual mode list (VML) is built and maintained in the serving Node B, for example the Node B 12 in Figure 1.

Specifically, the UE reports its MIMO mode capabilities to the serving Node B, and the serving Node B builds the VML based on its own capabilities and those of the UE. As discussed in more detail below, it is advantageous for the VML to be maintained by the network element(s) that decide and execute handovers. However, the VML could be built by the UE, the Node B, the Radio Network Controller (RNC), or by any other network element.

In step 42, a virtual mode list (VML) is formed for the target Node B. As before, the VML is a list of all of the possible modes that can be jointly supported by the UE and the relevant Node B. That is, the virtual mode list $V_{VML\_target}$ for a user $i$ is the list containing those modes supported both by the $i$th UE and by the target Node B. Thus:

$$V_{VML\_target} = V_{UE} \cap V_{NodeB\_target} = [\alpha_1, \alpha_2, \ldots, \alpha_M]$$

where $V_{UE}$ and $V_{NodeB\_target}$ are the modes supported by UE and the target Node B respectively and '$\alpha$' is the MIMO mode ID.

Again, in the case of the distributed architecture shown in Figure 1, the virtual mode list (VML) is built and maintained in the relevant Node B, in this case the target Node B 14 in Figure 1. Specifically, the MIMO mode capabilities of the UE are reported to the target Node B, which is able to build the target VML.

In step 44, the two virtual mode lists, for the serving Node B and for the target Node B, are exchanged, to form a common virtual mode list. The common virtual mode list ($V_{VML-c}$) contains the set of MIMO modes that can be supported by the serving and target Node Bs for a particular UE. The common VML $V_{VML\_c}$ for the $i$th user is built as follows:

$$V_{VML\_c} = V_{UE} \cap V_{NodeB\_serving} \cap V_{NodeB\_target} = [\alpha_1, \alpha_2, \ldots, \alpha_L]$$

where, $V_{UE}$, $V_{NodeB\_serving}$ and $V_{NodeB\_target}$ are the modes supported by the UE, the serving Node B and the target Node B respectively, and the '$\alpha$' are the IDs for the MIMO modes belonging to $V_{VML\_c}$.

This information exchange takes place over the direct Node B-Node B interface, such as the interface 24 shown in Figure 1. Where the serving Node B is to control the handover, then it is only necessary for the virtual mode list formed for the target Node B to be sent to the serving Node B. An alternative is for the serving Node B to request the target Node B to report its mode capabilities over the direct Node B-Node B interface in order to build the common VML between the serving and target Node Bs for the given UE.

In step 46, it is determined whether the current MIMO mode, in use in the serving Node B 12, is supported by the target Node B 14, that is, whether it is in the common VML.

If it is determined in step 46 that the current MIMO mode is not in the common VML, the process passes to step 48, in which it is determined whether the common VML in fact contains any MIMO modes.

Assuming that it is determined in step 48 that the common VML does contain at least one MIMO mode, the process passes to step 50, in which it is determined whether the common VML contains more than one such MIMO mode.

If it is determined in step 50 that the common VML contains more than one MIMO mode, the process passes to step 52, in one of these modes is selected as the best common mode. Which of the modes in the common VML is to be considered as the best mode can be decided based on the requirements of the ongoing connection. For example, the best mode can be decided based on coverage or capacity, or as the mode that best satisfies a quality of service requirement, or based on UE measurement reports, for example.

Once one of the available modes has been selected in step 52 of the process, or if it is determined in step 50 that the common VML contains only one MIMO mode, the process passes to step 54, in which the serving Node B performs a mode switch to the relevant mode.

Once the switch to the relevant common mode has been performed, the process passes to step 56, in which steps are taken to prevent further mode switching while the handover is taking place. The process than passes to step 58, in which the handover is performed.

If it is determined in step 46 that the current MIMO mode is in the common VML then, in this illustrated embodiment of the invention, no mode switching is performed, and the process passes directly to steps 56 and 58, in which mode switching is frozen, and the handover is performed, respectively. It will be apparent that, in other embodiments of the invention, mode switching to another mode in the common VML could be performed at this stage.

If it is determined in step 48 that there is no mode that is supported by the UE 20, and by both the serving Node B 12 and the target Node B 14, then, in this illustrated embodiment of the invention, the process passes to step 60, in which a non-MIMO scheme, for example a single input single output (SISO) scheme or a single input multiple output (SIMO) scheme is selected to simplify handover, and the appropriate mode switching is performed before the process passes to step 58.

The handover procedure is generally conventional, and will not be described further herein, except in so far as steps are taken to ensure that the target Node B operates using the desired MIMO mode when the handover is complete.

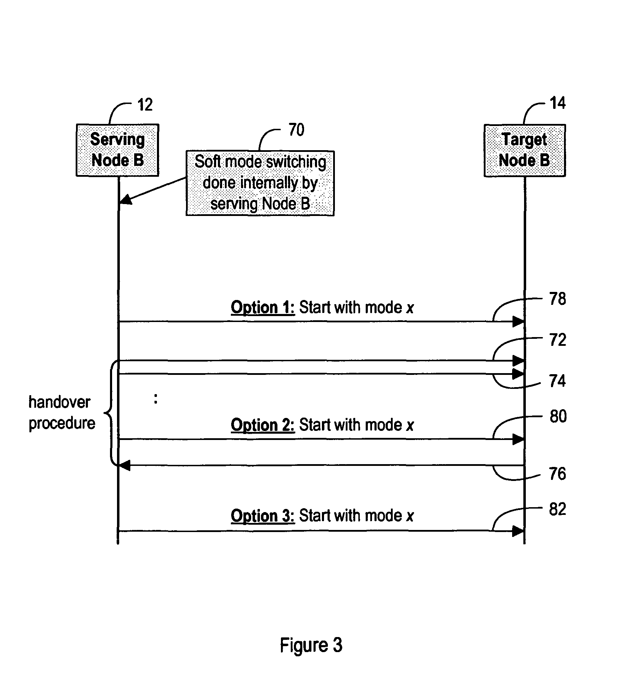

Figure 3 is a schematic diagram, indicating message flows between the serving Node B 12 and the target Node B 14.

Specifically, Figure 3 shows that, after the mode switching 70 has been performed in the serving Node B 12, a handover procedure is performed, involving messages 72, 74, 76 between the serving Node B 12 and the target Node B 14. These messages are only representative of messages transmitted during the handover procedure, and their content will not be described further, as they are not relevant to the present invention.

Figure 3 also shows that there are at least three possible times at which a message can be sent from the serving Node B 12 to the target Node B 14.

As a first option, a message 78 can be sent from the serving Node B 12 to the target Node B 14, indicating that the target Node B should start its operation with a particular MIMO mode, before the handover procedure starts. This has the main advantage that the target Node B will have sufficient time to start with the requested mode, and this can be particularly advantageous for a soft handover, where no interruption is desired.

As a second option, a message 80 can be sent from the serving Node B 12 to the target Node B 14, during the handover procedure, for example piggybacked onto one of the handover related messages, the message 80 again indicating that the target Node B should start its operation with a particular MIMO mode. To some extent this option reduces the signalling overheads, but it means that the target Node B would be required to handle a number of tasks simultaneously.

As a third option, a message 82 can be sent from the serving Node B 12 to the target Node B 14, indicating that the target Node B should start its operation with a particular MIMO mode, just after the handover procedure. While this option might lead to longer handover interruptions, it has the advantage that the message 82 is sent only after the handover is complete, and thus does not lead to any wastage of signalling in the event of a handover failure.

It will be apparent that, where it is determined that there is no MIMO mode that is supported by the serving Node B 12 and by the target Node B 14, and hence a non-MIMO mode is selected, the same three options exist for notifying the target Node B of the node with which the target Node B should start its operation.

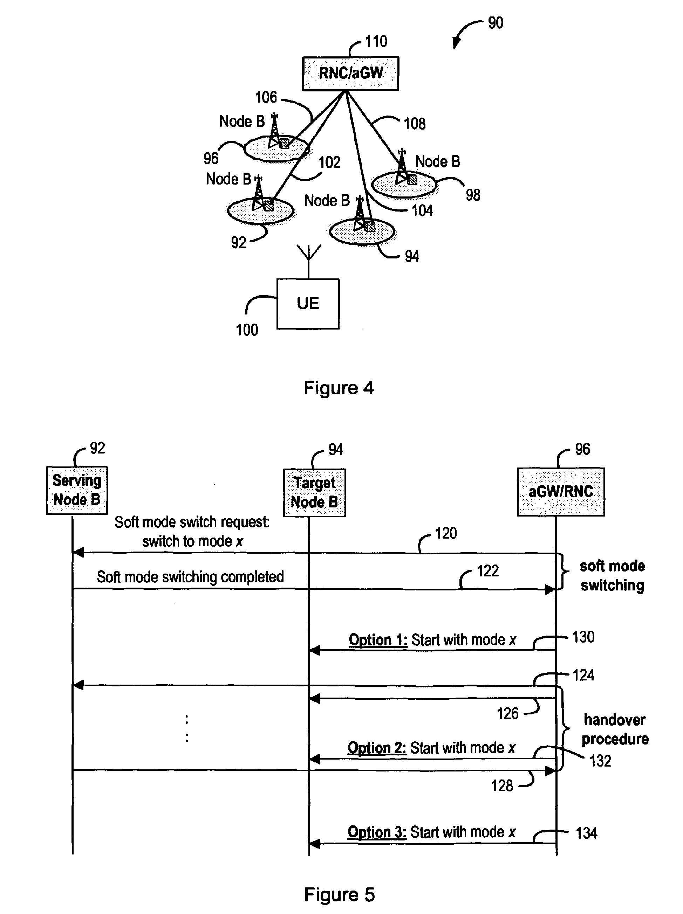

Figure 4 is a schematic diagram, illustrating a part of an alternative cellular wireless communications system 90. Specifically, Figure 4 shows four Node Bs 92, 94, 96, 98, providing cellular network coverage for mobile devices, such as the User Equipment (UE) 100, moving within the network coverage area. Each of the Node Bs 92, 94, 96, 98 has a respective connection 102, 104, 106, 108 to a combined radio network controller and access gateway (RNC/aGW) 110. Again, it will be clear to the person skilled in the art that the system 10 will in fact include many more Node Bs, and many more mobile devices, but the system shown in Figure 4 is sufficient for an explanation of the present invention.

Figure 4 shows a centralized architecture, in which the RNC/aGW 110 performs user and control plane switching, and also processes radio related information.

In the case of this system, there is again performed a method as illustrated in Figure 2, although the method differs from that described with reference to Figure 2, in that the process is performed under the control of the RNC/aGW 110.

Thus, the RNC/aGW 110 is aware of the capabilities of the UE 100 and of the various Node Bs, and is therefore able to build and maintain the VMLs for the target Node B and the serving Node B, and the common VML.

Any mode switching required by the procedure of Figure 2 is also performed in this case under the control of the RNC/aGW 110. Further, the RNC/aGW 110 controls the handover procedure, and also is responsible for informing the target Node B of the mode that is to be used after the handover.

Figure 5 is a schematic diagram, indicating message flows between the RNC/aGW 110, the serving Node B, for example the Node B 92, and the target Node B, for example the Node B 94.

Specifically, Figure 5 shows that, at step 54 in the process shown in Figure 2, the RNC/aGW 110 sends a message 120 to the serving Node B 92, instructing it to switch to a specified mode. When this has been done, the serving Node B 92 returns a confirmatory message 122.

Thereafter, a handover procedure is performed, involving messages 124, 126, 128 between the RNC/aGW 110, the serving Node B 92 and the target Node B 94. These messages are only representative of messages transmitted during the handover procedure, and their content will not be described further, as they are not relevant to the present invention.

Figure 5 also shows that there are at least three possible times at which a message can be sent from the RNC/aGW 110 to the target Node B 94, indicating that the target Node B should start its operation with a particular MIMO mode.

As a first option, a message 130 can be sent from the RNC/aGW 110 to the target Node B 94 before the handover procedure starts. This has the main advantage that the target Node B will have sufficient time to start with the requested mode, and this can be particularly advantageous for a soft handover, where no interruption is desired.

As a second option, a message 132 can be sent from the RNC/aGW 110 to the target Node B 94, during the handover procedure, for example piggybacked onto one of the handover related messages. To some extent this option reduces the signalling overheads, but it means that the target Node B would be required to handle a number of tasks simultaneously.

As a third option, a message 134 can be sent from the RNC/aGW 110 to the target Node B 94, just after the handover procedure. While this option might lead to longer handover interruptions, it has the advantage that the message 134 is sent only after the handover is complete, and thus does not lead to any wastage of signalling in the event of a handover failure.

It will again be apparent that, where it is determined that there is no MIMO mode that is supported by the serving Node B 12 and by the target Node B 14, and hence a non-MIMO mode is selected, the same three options exist for notifying the target Node B of the node with which the target Node B should start its operation.

The execution time scales of HARQ and handover differ significantly, and there can be several HARQ transmissions during a handover procedure. To prevent call dropping, handover has a higher priority than HARQ. Meanwhile, a UE has limited processing capability, for example in terms of the number of parallel processes that it can handle. Therefore, if several HARQ transmissions are required during a handover procedure, these may not be able to be performed well if the mode is also changed during the handover. Thus, the mode switching described herein prevents the loss of HARQ processes and thereby prevents the HARQ performance degradation during handover. Further, the handover processing delay can also be reduced if, prior to the handover, the UE switches to a common mode that can be used in the serving and target Node Bs.

There are thus described a method, and network elements, that can be used to simplify the handover procedure, by ensuring that the relevant Node Bs are operating an appropriate MIMO mode.

## Claims

1. A method for performing a handover of a user equipment (20) from a serving radio base station (12) to a target radio base station (14), wherein the serving radio base station (12) that executes the handover maintains a list of MIMO modes jointly supported by the user equipment (20), the serving radio base station (12), and the target radio base station (14) to ensure before the handover that the user equipment (20) is operating in one of the MIMO modes that is supported by the serving radio base station (12) and by the target radio base station (14),

   **characterised by**

   forming (40) a first mode list, which includes potential MIMO modes jointly supported by the user equipment (20) and the serving radio base station (12);

obtaining information directly from the target radio base station (14) about modes supported by the target base station (14);

forming (42) a second mode list, which includes potential MIMO modes jointly supported by the user equipment (20) and the target radio base station (14);

selecting (52), before performing the handover, a preferred mode that is supported by the serving radio base station (12) and by the target radio base station (14);

requesting (78,80,82) the target radio base station (14) to use said mode that is supported by the serving radio base station (12) and by the target radio base station (14); and

switching (54) operation of the serving radio base station (12) to said preferred mode.

2. A method according to claim 1, wherein the preferred mode is selected based on reported measurements by the user equipment (20).

3. A method according to claim 1, wherein the preferred mode is selected based on ability to meet quality of service target requirements.

4. A method according to claim 1, wherein said request is made before the execution of the handover.

5. A method according to claim 1, wherein said request is made during the execution phase of the handover.

6. A method according to claim 1, wherein said request is made after successful completion of the handover procedure.

7. A serving radio base station (12) for use in a cellular communications network (10), wherein the radio base station (14) is adapted to maintain a list of MIMO modes jointly supported by the user equipment (20), the serving radio base station (12), and a target radio base station (14) to ensure before the handover that the user equipment (20) is adapted to operate in one of the MIMO modes that is supported by the serving radio base station (12) and by the target radio base station (14),
**characterised by**:

means for forming a first mode list, which includes potential MIMO modes jointly supported by the user equipment (20) and the serving radio base station (12);

means for obtaining information directly from the target radio base station (14) about modes supported by the target base station (14);

means for forming a second mode list, which includes potential MIMO modes jointly supported by the user equipment (20) and the target radio base station (14);

means for selecting, before performing the handover, a preferred mode that is supported by the serving radio base station (12) and by the target radio base station (14);

means for requesting the target radio base station (14) to use said mode that is supported by the serving radio base station (12) and by the target radio base station (14); and

means for switching operation of the serving radio base station (12) to said preferred mode.


**Patentansprüche**

1. Verfahren zum Ausführen eines Handovers eines Benutzergeräts (20) von einer Serving-Funkbasisstation (12) an eine Ziel-Funkbasisstation (14), worin die Serving-Funkbasisstation (12), die den Handover ausführt, eine Liste von MIMO (Mehrfacheingang-Mehrfachausgang)-Modi pflegt, die vom Benutzergerät (20), der Serving-Funkbasisstation (12) und der Ziel-Funkbasisstation (14) gemeinsam unterstützt werden, um vor dem Handover sicherzustellen, dass das Benutzergerät (20) in einem der MIMO-Modi arbeitet, der von der Serving-Funkbasisstation (12) und von der Ziel-Funkbasisstation (14) unterstützt wird,
**gekennzeichnet durch**:

Formen (40) einer ersten Modus-Liste, die potentielle MIMO-Modi einschließt, die vom Benutzergerät (20) und der Serving-Funkbasisstation (12) gemeinsam unterstützt werden;

Erhalten von Information direkt von der Ziel-Funkbasisstation (14) über Modi, die von der Ziel-Basisstation (14) unterstützt werden;

Formen (42) einer zweiten Modus-Liste, die potentielle MIMO-Modi einschließt, die vom Benutzergerät (20) und der Ziel-Funkbasisstation (14) gemeinsam unterstützt werden;

vor dem Ausführen des Handovers einen bevorzugten Modus auswählen (52), der von der Serving-Funkbasisstation (12) und von der Ziel-Funkbasisstation (14) unterstützt wird;

von der Ziel-Funkbasisstation (14) anfordern (78,80,82), den Modus zu verwenden, der von der Serving-Funkbasisstation (12) und von der Ziel-Funkbasisstation (14) unterstützt wird; und

Umschaltet (54) des Betriebs der Serving-Funkbasisstation (12) auf den bevorzugten Modus.

2. Verfahren nach Anspruch 1, worin der bevorzugte Modus auf der Basis von gemeldeten Messungen durch das Benutzergerät (20) ausgewählt wird.

3. Verfahren nach Anspruch 1, worin der bevorzugte Modus auf der Basis der Fähigkeit basiert, Dienstgüte-Zielanforderungen zu erfüllen.

4. Verfahren nach Anspruch 1, worin die Anforderung vor der Ausführung des Handovers gemacht wird.

5. Verfahren nach Anspruch 1, worin die Anforderung während der Ausführungsphase des Handovers gemacht wird.

6. Verfahren nach Anspruch 1, worin die Anforderung nach erfolgreicher Beendigung der Handover-Prozedur gemacht wird.

7. Serving-Funkbasisstation (12) zur Verwendung in einem zellularen Kommunikationsnetz (10), worin die Funkbasisstation (14) angepasst ist zum Pflegen einer Liste von MIMO-Modi, die vom Benutzergerät (20), der Serving-Funkbasisstation (12) und der Ziel-Funkbasisstation (14) gemeinsam unterstützt werden, um vor dem Handover sicherzustellen, dass das Benutzergerät (20) angepasst ist zum Arbeiten in einem der MIMO-Modi, der von der Serving-Funkbasisstation (12) und von der Ziel-Funkbasisstation (14) unterstützt wird,

**gekennzeichnet durch**:

Mittel zum Formen einer ersten Modus-Liste, die potentielle MIMO-Modi einschließt, die vom Benutzergerät (20) und der Serving-Funkbasisstation (12) gemeinsam unterstützt werden;

Mittel zum Erhalten von Information direkt von der Ziel-Funkbasisstation (14) über Modi, die von der Ziel-Basisstation (14) unterstützt werden;

Mittel zum Formen einer zweiten Modus-Liste, die potentielle MIMO-Modi einschließt, die vom Benutzergerät (20) und der Ziel-Funkbasisstation (14) gemeinsam unterstützt werden;

Mittel, um vor dem Ausführen des Handovers einen bevorzugten Modus auszuwählen, der von der Serving-Funkbasisstation (12) und von der Ziel-Funkbasisstation (14) unterstützt wird;

Mittel, um von der Ziel-Funkbasisstation (14) anzufordern, den Modus zu verwenden, der von der Serving-Funkbasisstation (12) und von der Ziel-Funkbasisstation (14) unterstützt wird; und

Mittel zum Umschaltet des Betriebs der Serving-Funkbasisstation (12) auf den bevorzugten Modus.

**Revendications**

1. Procédé de mise en oeuvre d'un transfert intercellulaire d'un équipement d'utilisateur (20), d'une station de base radio de desserte (12) à une station de base radio cible (14), dans lequel la station de base radio de desserte (12) qui exécute le transfert intercellulaire maintient une liste de modes MIMO conjointement pris en charge par l'équipement d'utilisateur (20), la station de base radio de desserte (12), et la station de base radio cible (14), en vue de garantir, préalablement au transfert intercellulaire, que l'équipement d'utilisateur (20) opère dans l'un des modes MIMO qui est pris en charge par la station de base radio de desserte (12) et par la station de base radio cible (14) ; **caractérisé en ce qu'**il consiste à :

former (40) une première liste de modes, qui inclut des modes MIMO potentiels conjointement pris en charge par l'équipement d'utilisateur (20) et la station de base radio de desserte (12) ;

obtenir des informations directement auprès de la station de base radio cible (14), concernant les modes pris en charge par la station de base radio cible (14) ;

former (42) une seconde liste de modes, qui inclut les modes MIMO potentiels conjointement pris en charge par l'équipement d'utilisateur (20) et la station de base radio cible (14) ;

sélectionner (52), avant de mettre en oeuvre le transfert intercellulaire, un mode préféré qui est pris en charge par la station de base radio de desserte (12) et par la station de base radio cible (14) ;

demander (78, 80, 82) à la station de base radio cible (14) d'utiliser ledit mode qui est pris en charge par la station de base radio de desserte (12) et par la station de base radio cible (14) ; et

commuter (54) l'exploitation de la station de base radio de desserte (12) sur ledit mode préféré.

2. Procédé selon la revendication 1, dans lequel le mode préféré est sélectionné sur la base de mesures signalées par l'équipement d'utilisateur (20).

3. Procédé selon la revendication 1, dans lequel le mode préféré est sélectionné sur la base d'une capacité à satisfaire des exigences cibles de qualité de service.

4. Procédé selon la revendication 1, dans lequel ladite demande est mise en oeuvre avant l'exécution du transfert intercellulaire.

5. Procédé selon la revendication 1, dans lequel ladite demande est mise en oeuvre au cours de la phase d'exécution du transfert intercellulaire.

6. Procédé selon la revendication 1, dans lequel ladite demande est mise en oeuvre après l'achèvement réussi de la procédure de transfert intercellulaire.

7. Station de base radio de desserte (12) destinée à être utilisée dans un réseau de communication cellulaire (10), dans laquelle la station de base radio (14) est apte à maintenir une liste de modes MIMO conjointement pris en charge par l'équipement d'utilisateur (20), la station de base radio de desserte (12), et une station de base radio cible (14), en vue de garantir, préalablement au transfert intercellulaire, que l'équipement d'utilisateur (20) est apte à opérer dans l'un des modes MIMO qui est pris en charge par la station de base radio de desserte (12) et par la station de base radio cible (14) ;

**caractérisé par** :

un moyen pour former une première liste de modes, qui inclut des modes MIMO potentiels conjointement pris en charge par l'équipement d'utilisateur (20) et la station de base radio de desserte (12) ;

un moyen pour obtenir des informations directement auprès de la station de base radio cible (14), concernant les modes pris en charge par la station de base radio cible (14) ;

un moyen pour former une seconde liste de modes, qui inclut les modes MIMO potentiels conjointement pris en charge par l'équipement d'utilisateur (20) et la station de base radio cible (14) ;

un moyen pour sélectionner, avant de mettre en oeuvre le transfert intercellulaire, un mode préféré qui est pris en charge par la station de base radio de desserte (12) et par la station de base radio cible (14) ;

un moyen pour demander à la station de base radio cible (14) d'utiliser ledit mode qui est pris en charge par la station de base radio de desserte (12) et par la station de base radio cible (14) ; et

un moyen pour commuter l'exploitation de la station de base radio de desserte (12) sur ledit mode préféré.

Figure 1

Figure 2

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6937592 B
- US 20060068789 A

- EP 1613117 A